# FASCICULE DE BREVET EUROPEEN

(11) **EP 2 702 667 B1**
(45) Date de publication et mention de la délivrance du brevet: **20.09.2017**
(21) Numéro de dépôt: 12722452.5
(22) Date de dépôt: 20.04.2012
(51) Int. Cl.: B60L 3/00, H02P 25/22, B60L 11/18, B60L 15/02, B60L 15/20

(54) **DISPOSITIF ET PROCÉDÉ DE CONVERSION REVERSIBLE DE PUISSANCE ÉLECTRIQUE MULTIFONCTION**
VORRICHTUNG UND VERFAHREN FÜR REVERSIBLE UMWANDLUNG VON ELEKTRISCHER MULTIFUNKTIONSENERGIE
DEVICE AND METHOD FOR REVERSIBLE CONVERSION OF MULTIFUNCTION ELECTRICAL POWER

(30) Priorité: 29.04.2011 FR 1153673
(43) Date de publication de la demande: 05.03.2014
(73) Titulaire: Renault S.A.S., 92100 Boulogne-Billancourt (FR)
(72) Inventeur: GAY-DESHARNAIS, Sebastien, F-78180 Montigny Le Bretonneux (FR); LOUDOT, Serge, F-91190 Villers Le Bacle (FR)
(86) Numéro de dépôt international: PCT/FR2012/050871
(87) Numéro de publication internationale: WO 2013/001186

(56) Documents cités:
- EP-A2- 1 109 310
- EP-A2- 2 177 413
- GB-A- 2 373 648
- JP-A- 63 048 182
- US-A1- 2005 134 238
- US-A1- 2009 033 258
- US-B1- 6 184 648

## Description

L'invention concerne un dispositif et un procédé qui permettent une conversion réversible de puissance pour remplir plusieurs fonctions. Plus particulièrement, l'invention porte sur un dispositif agencé pour remplir une fonction de démarreur de véhicule automobile par conversion d'énergie électrique en énergie mécanique, une fonction d'alternateur par conversion d'énergie mécanique en énergie électrique et une fonction de passerelle entre deux réseaux électriques par conversion réversible d'énergie électrique fournie par l'un des réseaux en énergie électrique à l'autre réseau.

Dans un véhicule automobile qui comporte des actionneurs électriques, il est de première importance d'assurer le contrôle/commande et l'alimentation en énergie électrique d'actionneurs tels que des actionneurs de freinage, des actionneurs de braquage ou des actionneurs de restitution d'effort. Un dédoublement de réseau électrique dans le véhicule automobile, assure le fonctionnement du véhicule en cas de défaillance d'un réseau en couplant les organes électriques du véhicule sur l'autre réseau.

Par exemple, le document EP2177413 décrit différentes commandes tout électrique de véhicule automobile, répertoriées par des acronymes XbW sur le modèle de ceux utilisés en aviation FbW (pour Fly by Wire en anglais). Par exemple une commande électrique de direction serait nommée SbW (Steer-by-Wire en anglais), une commande électrique de freinage serait nommée BbW (Brake-by-Wire en anglais). Ainsi de façon générale la lettre X de l'acronyme XbW désigne la commande tout électrique d'un organe quelconque de véhicule automobile pour lequel la sécurité de fonctionnement requiert habituellement une commande mécanique. Ce document se focalise essentiellement sur le traitement des automatismes nécessaires à la mise en oeuvre de systèmes XbW sans aborder suffisamment les problèmes d'alimentation en énergie électrique des organes.

On connaît déjà des dispositifs permettant de prélever une puissance électrique sur un réseau d'alimentation principale pour transmettre la puissance prélevée à un réseau secondaire de contrôle/commande et ou d'alimentation d'accessoires. Ainsi, le document GB2373648 divulgue un circuit comprenant d'une part un premier et un deuxième moyen de commutation pour connecter un premier noeud, lié à un enroulement de démarreur/alternateur, soit à une première borne de sortie destinée à un circuit de fourniture/accumulation de puissance, soit à un noeud de potentiel de référence. Le circuit comprend d'autre part un deuxième et un troisième moyen de commutation pour connecter le premier noeud à une deuxième borne destinée à un réseau secondaire, typiquement un réseau d'éclairage. L'inductance du démarreur/alternateur est utilisée pour permettre aux moyens de commutation d'effectuer une conversion en courant continu d'un réseau à l'autre.

Cependant les dispositifs connus, comme c'est le cas du dispositif du document ci-dessus cité, sont inappropriés pour assurer le fonctionnement du véhicule en utilisant le circuit secondaire en cas de défaillance du circuit principal car ils posent plusieurs problèmes pour ce faire. Un problème est dans la difficulté de pouvoir augmenter suffisamment la puissance du réseau secondaire pour fournir l'alimentation électrique nécessaire en cas de défaillance du réseau principal. Un autre problème est dans le risque de propagation de défaut du circuit principal au circuit secondaire.

Le document EP1109310 divulgue un système alternateur d'un véhicule comprenant deux enroulements de stator qui sont respectivement connectés à deux circuits redresseurs pilotables qui respectivement alimentent deux système électriques.

En vue de remédier aux problèmes des dispositifs connus, l'invention a pour objet un dispositif de conversion réversible de puissance électrique en puissance mécanique comportant une machine électrique, des premiers moyens de commutation pour connecter un premier jeu d'enroulements d'induit de la machine électrique à un premier réseau électrique et des premiers moyens de commande pour piloter les premiers moyens de commutation de manière à pouvoir échanger avec le premier jeu d'enroulements d'induit une première puissance électrique. La première puissance électrique est asservie à une première consigne de valeur positive pour transmettre la première puissance électrique du premier réseau électrique vers le premier jeu d'enroulements d'induit et de valeur négative pour transmettre la première puissance électrique du premier jeu d'enroulements d'induit vers le premier réseau électrique.

Le dispositif est remarquable en ce que la machine électrique comprend au moins un deuxième jeu d'enroulements d'induit séparé du premier jeu d'enroulements d'induits par isolation galvanique, et
en ce qu'il comprend des deuxièmes moyens de commutation pour connecter le deuxième jeu d'enroulements d'induit à au moins un deuxième réseau électrique et des deuxièmes moyens de commande pour piloter les deuxièmes moyens de commutation de manière à pouvoir échanger avec le deuxième jeu d'enroulements d'induit une deuxième puissance électrique. La deuxième puissance électrique est asservie à une deuxième consigne de valeur positive pour transmettre la deuxième puissance électrique du deuxième réseau électrique vers le deuxième jeu d'enroulements d'induit et de valeur négative pour transmettre la deuxième puissance électrique du deuxième jeu d'enroulements d'induit vers le deuxième réseau électrique.

De plus, les deuxièmes moyens de commutation et les deuxièmes moyens de commande sont séparés des premiers moyens de commutation et desdits premiers moyens de commande par isolation galvanique.

Particulièrement, la machine électrique comprend au moins deux jeux distincts de dents de stator magnétiquement couplés, un premier jeu de dents de stator sur chacune desquelles est bobiné un enroulement du premier jeu d'enroulements d'induit et un deuxième jeu de dents de stator sur chacune desquelles est bobiné un enroulement du deuxième jeu d'enroulements d'induit.

Particulièrement aussi, la machine électrique comprend un jeu commun de dents de stator sur chacune desquelles sont bobinés un enroulement du premier jeu d'enroulements d'induit et un enroulement du deuxième jeu d'enroulements d'induit, séparés l'un de l'autre par une paroi électriquement isolante.

De préférence, au moins les premiers moyens de commutation comprennent au moins deux branches parallèles comportant des extrémités connectables entre une première et une deuxième polarité du premier réseau électrique, un point milieu connecté à une entrée d'enroulement d'induit et des interrupteurs électroniques commandés par les premiers moyens de commande et disposés chacun entre le point milieu et l'une des extrémités connectables.

Particulièrement, au moins les premiers moyens de commande comprennent des capteurs de mesure de courant et de tension dans les enroulements d'induit pour mesurer la puissance échangée et un module de mise en conduction des interrupteurs par modulation d'impulsions qui tendent à annuler une différence entre la consigne d'asservissement en puissance et la puissance mesurée.

Plus particulièrement, les moyens de commande comprennent :
- un module d'élaboration d'au moins une consigne de flux magnétique direct relatif à un champ inducteur et/ou d'une consigne de flux magnétique orthogonal relatif à un champ d'induit en fonction d'une vitesse de rotation de la machine électrique,
- un régulateur de puissance qui pilote le module d'élaboration pour annuler ladite différence entre la consigne d'asservissement en puissance et la puissance mesurée,
- un module d'estimation de flux magnétique dans la machine électrique à partir des capteurs de mesure de courant et de tension,
- au moins un régulateur de flux magnétique qui pilote le module de mise en conduction pour annuler au moins une différence entre une consigne de flux magnétique et un flux magnétique estimé dans la machine électrique.

Avantageusement, les moyens de commande comprennent un saturateur qui autorise le flux magnétique direct estimé à être supérieur à la consigne de flux magnétique direct.

L'invention a aussi pour objet un véhicule automobile comprenant deux réseaux électriques séparés par isolation galvanique et un dispositif conforme à l'invention.

L'invention a encore pour objet un procédé mis en oeuvre dans un véhicule selon l'invention, comprenant des actions consistant à positionner :
- une première et une deuxième consigne de puissance à des valeurs dont la somme est positive de sorte que la machine électrique fonctionnant en mode moteur, convertit une puissance électrique en puissance mécanique,
- la première et la deuxième consigne de puissance à des valeurs dont la somme est négative de sorte que la machine électrique fonctionnant en mode générateur, convertit une puissance mécanique en puissance électrique,
- la première et la deuxième consigne de puissance à des valeurs de signes opposés de sorte que la machine électrique fonctionnant en mode transformateur, transfère une puissance électrique d'un réseau à l'autre réseau électrique.

L'invention sera mieux comprise à l'aide d'exemples de réalisation d'un dispositif conforme à l'invention en référence aux dessins annexés, dans lesquels :
- la figure 1 est une vue schématique de double circuit avec passerelle de conversion d'énergie distincte d'un alternateur et d'un démarreur de véhicule ;
- la figure 2 est une représentation schématique de dispositif conforme à l'invention ;
- les figures 3 et 4 sont des représentations schématiques plus détaillées de modes de réalisation du dispositif de la figure 2 ;
- les figures 5 et 6 sont des vues en coupe radiale de deux modes de réalisation de machine électrique conforme à l'invention ;
- les figures 7 et 8 sont des diagrammes vectoriels pour expliquer des modes de mise en oeuvre possibles du procédé de l'invention.

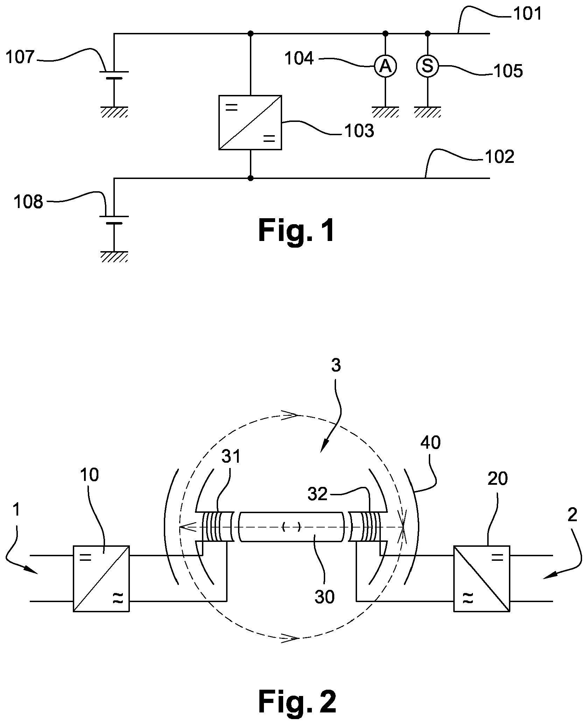

La figure 1 montre un schéma classique de réseau électrique pour commandes découplées dans un véhicule automobile. La sûreté de fonctionnement (SdF) de l'alimentation électrique de systèmes automobiles est basée sur une redondance de sources obtenue par deux lignes d'alimentation 101 et 102. Une première source de tension, constituée par exemple par une batterie 107, est connectée à la ligne 101 et une deuxième source de tension, constituée par exemple par une batterie 108, est connectée à la ligne 102. Ainsi, les deux lignes d'alimentation 101 et 102 peuvent alimenter de manière redondante en énergie électrique des actionneurs de freinage, de braquage et de restitution. Un alternateur 104 avec pont redresseur, branché sur la ligne 101, permet de recharger la batterie 107. Un convertisseur cc-cc 103, généralement nommé « passerelle » (Gateway en anglais), permet de recharger la batterie 108 à partir de l'alternateur 104, accessoirement à partir de la batterie 107, par transfert d'énergie électrique de la ligne 101 à la ligne 102. Symétriquement, le convertisseur 103 permet de faire fonctionner un démarreur 105 à partir de la batterie 108 alors que le démarreur 105, branché sur la ligne 101, est normalement alimenté par la batterie 107. Le convertisseur 103 permet de garantir qu'une défaillance comme par exemple un circuit ouvert, un court circuit ou des parasites sur l'une des deux lignes, ne perturbe pas l'autre ligne.

On note sur la figure 1 que l'énergie électrique générée par l'alternateur 104, est traitée successivement par le redresseur (non représenté) de l'alternateur et par la passerelle ou convertisseur 103. L'énergie électrique est donc affectée deux fois par des pertes.

Le convertisseur 103 de la figure 1 est de type bidirectionnel de façon à pouvoir passer de l'énergie dans les deux sens et ceci entre deux lignes dont la tension de l'une peut être supérieure ou inférieure à la tension de l'autre. La possibilité d'être élévateur/abaisseur, rend le convertisseur complexe, coûteux, lourd et volumineux.

Pour assurer une isolation galvanique entre les lignes 101 et 102 de façon à réduire les conséquences d'un court-circuit sur l'une des lignes, le convertisseur 103 de la figure 1, comprend généralement un transformateur à haute fréquence qui génère des problèmes de coût, de masse et de volume dans le véhicule.

La puissance échangeable entre les deux lignes par le convertisseur 103 reste limitée pour des raisons de rendement, de coût, de volume, et de masse. Cette limitation en puissance du convertisseur rend difficile d'envisager le démarrage du moteur thermique au moyen de la batterie 108, en cas de défaillance de la batterie 107.

L'un des buts de l'invention est de construire un véhicule automobile comprenant plusieurs réseaux électriques 1, 2 séparés par isolation galvanique et un dispositif permettant de transférer une puissance électrique d'un réseau à l'autre de manière performante.

Pour remédier aux inconvénients du schéma de la figure 1, la figure 2 présente un dispositif conforme à l'invention sous forme d'un alterno-démarreur passerelle sécurisé, noté par la suite ADPS. Le dispositif de la figure 2 comprend une machine électrique 3 incluant deux ou plus de deux jeux, symétriques ou non d'enroulements statoriques, nommés enroulements d'induit 31, 32 dans une machine à courant alternatif et capables de débiter chacun dans un redresseur actif différent. Les jeux d'enroulements 31, 32 sont séparés électriquement mais couplés, totalement ou partiellement, magnétiquement. La figure 2 montre le principe de l'ADPS dans son ensemble, avec comme exemple le stator 40, partiellement représenté, et le rotor 30 d'une machine à réluctance variable.

L'ADPS de la figure 2 réalise un dispositif de conversion réversible de puissance électrique en puissance mécanique au moyen de la machine électrique 3.

Des premiers moyens de commutation 10, par exemple sous forme d'un redresseur actif pouvant agir tant en mode redresseur qu'en mode onduleur, permettent de connecter le jeu d'enroulements d'induit 31 de la machine électrique 3 à un premier réseau électrique 1. Par convention, la puissance électrique est de valeur positive lorsqu'elle est transmise du réseau électrique 1 vers le jeu d'enroulements d'induit 31 et de valeur négative lorsqu'elle est transmise du jeu d'enroulements d'induit 31 vers le réseau électrique 1.

Des deuxièmes moyens de commutation 20, par exemple eux aussi sous forme d'un redresseur actif pouvant agir tant en mode redresseur qu'en mode onduleur, permettent de connecter le deuxième jeu d'enroulements d'induit 32 à un deuxième réseau électrique 2. Par convention ici encore, la puissance électrique est de valeur positive lorsqu'elle est transmise du réseau électrique 2 vers le jeu d'enroulements d'induit 32 et de valeur négative lorsqu'elle est transmise du jeu d'enroulements d'induit 32 vers le réseau électrique 2.

Parmi les nombreuses technologies possibles de réalisation de machines électriques, celles des machines asynchrones ne conviennent pas pour réaliser la machine 3 car leur cage d'écureuil ou leur rotor bobiné en court-circuit s'opposerait presque totalement au flux magnétique en mode de conversion cc-cc.

Pour réaliser la machine 3, on utilise de préférence la technologie des machines synchrones à aimant permanent, à réluctance ou à rotor bobiné. Le rotor bobiné permet de contrôler l'excitation de manière connue au moyen de bagues. Dans le cas des machines synchrones à rotor bobiné, le circuit électrique d'excitation est de préférence redondé pour garantir la présence d'une excitation en toutes circonstances.

Les bobinages raccourcis ou diamétraux, répartis ou non sont à proscrire car ils amènent un chevauchement des fils en plusieurs endroits du circuit : l'émail isolant chaque fil ne peut pas être considéré comme un isolant suffisamment fiable entre deux circuits pour des applications où la sécurité est cruciale. Une isolation entre phases pourrait résoudre en partie ce problème mais devrait être réalisée avec un tel soin que le coût d'une machine en exploserait.

Les bobinages sur dent sont ceux sélectionnés de façon à garantir une isolation galvanique convenable pour des applications sécurisées à un coût compatible avec des applications automobiles ou industrielles.

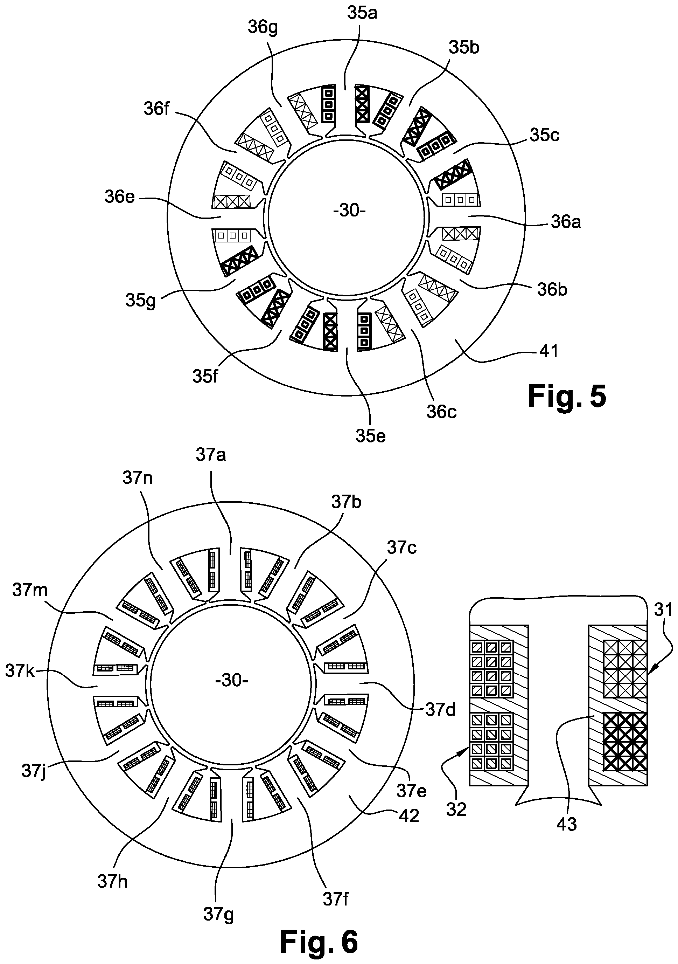

Les figures 5 et 6 montrent, à titre illustratif, deux modes de réalisation de la machine électrique 3 qui permettent chacun de séparer par isolation galvanique, le deuxième jeu d'enroulements d'induit 32 du premier jeu d'enroulements d'induits 31.

Dans le premier mode de réalisation représenté en figure 5, le stator 41 de la machine électrique comprend deux jeux distincts de dents, magnétiquement couplés. Un enroulement du premier jeu d'enroulements d'induit 31 est bobiné sur chacune de plusieurs dents 35a, 35b, 35c, 35e, 35f, 35g de stator collectivement référencées 35 pour constituer le premier jeu. Un enroulement du deuxième jeu d'enroulements d'induit 32 est bobiné sur chacune de plusieurs dents 36a, 36b, 36c, 36e, 36f, 36g de stator collectivement référencées 36 pour constituer le deuxième jeu.

Le bobinage des deux jeux d'enroulements d'induit 31, 32 sur deux jeux de dents 35, 36 distincts, permet d'obtenir une bonne isolation galvanique entre les jeux d'enroulement d'induit propres à chaque circuit.

Dans le deuxième mode de réalisation représenté en figure 6, le stator 42 de la machine électrique comprend un jeu commun de dents de stator 37a, 37b, 37c, 37d, 37e, 37f, 37g, 37h, 37j, 37k, 37m, 37n. Sur chaque dent sont bobinés un enroulement du premier jeu d'enroulements d'induit 31 et un enroulement du deuxième jeu d'enroulements d'induit 32. Sur chaque dent, les deux enroulements d'induit sont séparés l'un de l'autre par une paroi électriquement isolante 41.

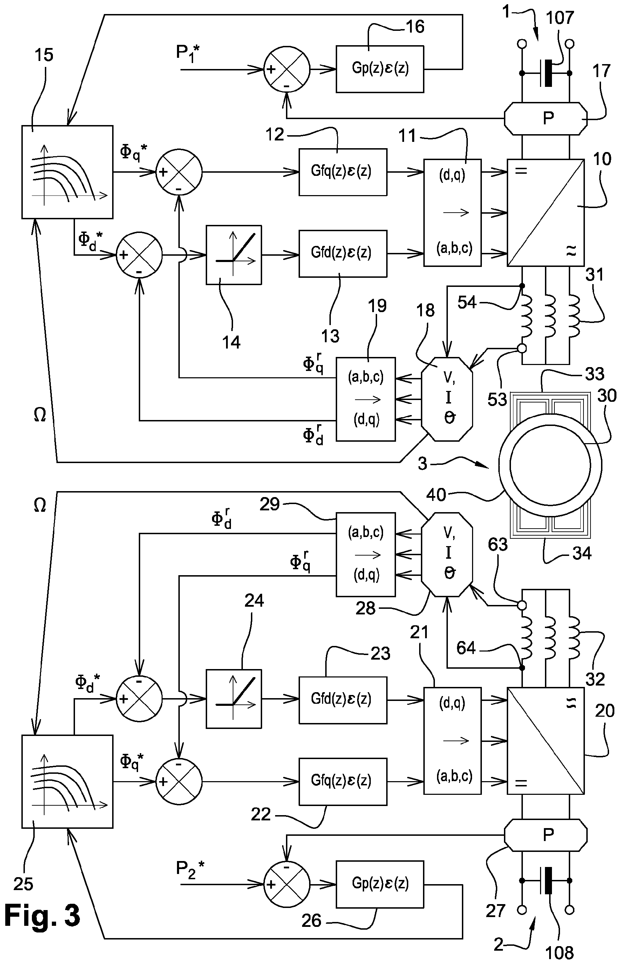

En référence à la figure 3, les moyens de commutation 10 sont pilotés par des moyens de commande 11, 12, 13, 14, 15, 16. Les moyens de commutation 20 sont pilotés par des moyens de commande 21, 22, 23, 24, 25, 26. Les deuxièmes moyens de commutation 20 et les deuxièmes moyens de commande 21-26 sont séparés des premiers moyens de commutation 10 et des premiers moyens de commande 11-16 par isolation galvanique de façon à pouvoir continuer à utiliser l'ADPS de manière sécurisée en cas de défaillance des premiers ou des deuxièmes moyens de commutation.

Un capteur de puissance 17 est monté sur le circuit 1 en entrée des moyens de commutation 10 pour mesurer une puissance électrique P du réseau électrique 1 qui est échangée avec le jeu d'enroulements d'induit 31. La puissance électrique P du réseau électrique 1 est accumulée et délivrée par la batterie 107 qui absorbe et délivre un courant continu sous une tension qui varie en fonction de la charge et de la résistance interne de la batterie. De manière connue, le capteur 17 mesure la puissance P en multipliant la tension par le courant électrique en entrée des moyens de commutation 10.

Un régulateur de puissance 16 est agencé pour asservir la puissance P mesurée à une consigne P₁* de valeur positive pour transmettre la puissance électrique du premier réseau électrique 1 vers le premier jeu d'enroulements d'induit 31 et de valeur négative pour transmettre la première puissance électrique du premier jeu d'enroulements d'induit 31 vers le premier réseau électrique 1. Le gain Gp(z) du régulateur 16 comporte éventuellement une composante proportionnelle et/ou une composante dérivée. Le gain Gp(z) du régulateur 16 comporte de préférence une composante intégrale de façon à annuler une erreur ε(z) résultant de la différence entre la puissance P mesurée par le capteur 17 et la consigne P₁* de puissance.

Ainsi, une boucle d'asservissement comprenant les moyens de commutation 10 et le régulateur de puissance 16, permet de faire fonctionner la machine 3, en d'autres termes une même machine électrique en mode démarreur en fournissant à partir du réseau 1 une puissance de valeur positive et en mode alternateur en fournissant à partir du réseau 1 une puissance de valeur négative.

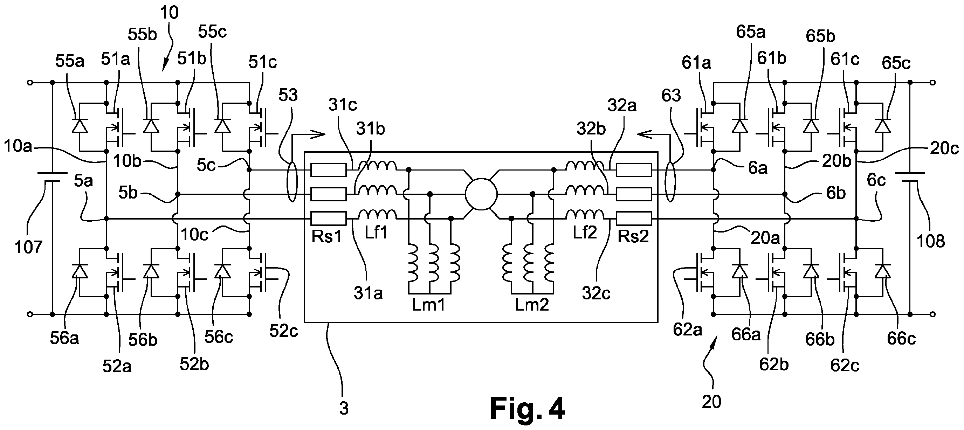

Dans l'exemple de mise en oeuvre illustré par la figure 4, les moyens de commutation 10 comprennent trois branches parallèles 10a, 10b, 10c qui permettent d'alimenter la machine 3 en triphasé. Deux branches 10a, 10b suffiraient pour alimenter la machine 3 en monophasé de même que plus de trois branches parallèles permettraient d'alimenter la machine 3 en multiphasé au-delà de trois phases. Les branches 10a, 10b, 10c comportent chacune deux extrémités connectables entre une première et une deuxième polarité du premier réseau électrique 1 qui constituent l'entrée des moyens de commutation 10. Chaque branche 10a, 10b, 10c comporte aussi un point milieu respectivement 5a, 5b, 5c connecté à une entrée d'enroulement d'induit 31a, 31b, 31c.

La branche 10a comporte des diodes 55a, 56a disposées l'une entre le point milieu 5a et l'une des extrémités connectables, l'autre entre le point milieu 5a et l'autre des extrémités connectables au réseau 1. La branche 10b comporte des diodes 55b, 56b disposées l'une entre le point milieu 5b et l'une des extrémités connectables, l'autre entre le point milieu 5b et l'autre des extrémités connectables au réseau 1. La branche 10c comporte des diodes 55c, 56c disposées l'une entre le point milieu 5c et l'une des extrémités connectables, l'autre entre le point milieu 5c et l'autre des extrémités connectables au réseau 1.

Lorsque la machine 3 génère entre les entrées des enroulements d'induit 31a, 31b, 31c, des différences de tension électrique supérieures à la somme de la tension de la batterie 107 et des tensions de seuil des diodes, les diodes mises en conduction font circuler un courant de la machine électrique 3 vers le réseau 1 de sorte que la machine 3 fonctionne alors naturellement en mode alternateur.

D'autre part, la branche 10a comporte des interrupteurs 51a, 52a disposés l'un entre le point milieu 5a et l'une des extrémités connectables, l'autre entre le point milieu 5a et l'autre des extrémités connectables au réseau 1. La branche 10b comporte des interrupteurs 51b, 52b disposés l'un entre le point milieu 5b et l'une des extrémités connectables, l'autre entre le point milieu 5b et l'autre des extrémités connectables au réseau 1. La branche 10c comporte des interrupteurs 51c, 52c disposés l'un entre le point milieu 5c et l'une des extrémités connectables, l'autre entre le point milieu 5c et l'autre des extrémités connectables au réseau 1.

Les interrupteurs sont par exemple des transistors de puissance à grille isolée (MOS pour Métal Oxyde Semiconductor en anglais) de type N.

Les interrupteurs 51a, 52a, 51b, 52b, 51c, 52c sont commandés par un module 11 de mise en conduction des interrupteurs par modulation d'impulsions. Les impulsions sont générées de façon à annuler la différence entre la consigne d'asservissement en puissance P₁* et la puissance P mesurée.

Le module 11 élabore de manière connue la modulation d'impulsions de façon à ce que les courants dans les phases a, b, c du jeu d'enroulements d'induit 31, produisent un flux magnétique direct Φ_{d} relatif à un champ inducteur sur un axe d et un flux magnétique orthogonal Φ_{q} relatif à un champ de réaction d'induit sur un axe q en fonction d'une vitesse de rotation Q de la machine électrique 3.

Un module 15 élabore une consigne de flux magnétique direct Φ_{d}* relatif au champ inducteur et une consigne de flux magnétique orthogonal Φ_{q}* relatif au champ de réaction d'induit, typiquement à partir d'une cartographie en fonction d'une puissance et d'une vitesse de rotation Q de la machine électrique 3. La valeur de puissance est celle données en sortie du régulateur 16.

Les consignes de flux magnétique Φ_{d}*, Φ_{q}* peuvent être directement appliquées en boucle ouverte en entrée du module 11.

De façon à améliorer la précision et les temps de réponse au moyen d'une boucle de régulation interne, un régulateur 13 de flux magnétique direct et un régulateur 12 de flux magnétique orthogonal sont insérés entre le module 15 et le module 11.

Le gain Gfq(z) du régulateur 12 de flux magnétique orthogonal comporte de préférence une composante intégrale de façon à annuler une erreur ε(z) résultant de la différence entre la consigne de flux magnétique Φ_{q}* et un retour de flux magnétique Φ_{q}^{r} estimé par un module 19 à partir de valeurs de tensions et de courants de phases a, b, c fournies par un module de mesure 18. Ce mode d'estimation est optionnel, des capteurs de positions suffisent.

Le module de mesure 18 est connecté à des capteurs 53, 54 de tension et de courant dans chacune des phases a, b, c des enroulements d'induit 31. Le module de mesure 18 est capable de déterminer une position angulaire θ du champ inducteur lié au rotor et, par dérivation temporelle, d'en déduire la vitesse de rotation Q de la machine électrique 3 qui est transmise au module 15.

Les capteurs 53, 54 de mesure de courant et de tension dans les enroulements d'induit 31 permettent optionnellement de mesurer la puissance P échangée et de se passer ainsi du capteur 17.

Le gain Gfd(z) du régulateur 13 de flux magnétique direct comporte de préférence lui aussi une composante intégrale de façon à annuler une image d'erreur ε(z) résultant de la différence entre la consigne flux magnétique Φ_{d}* et un retour de flux magnétique Φ_{d}^{r} estimé par le module 19 à partir de valeurs de tensions et de courants de phases a, b, c. Un saturateur 14 disposé en entrée du régulateur 13 donne l'image égale à l'erreur ε(z) tant que l'erreur est positive, en d'autres termes tant que le retour de flux magnétique Φ_{d}^{r} est inférieur à la consigne flux magnétique Φ_{d}*. Le saturateur 14 donne l'image égale à zéro lorsque l'erreur est négative, en d'autres termes lorsque le retour de flux magnétique Φ_{d}^{r} est supérieur à la consigne flux magnétique Φ_{d}*. Le saturateur 14 permet ainsi de ne pas désexciter la machine lorsque le flux direct effectif est supérieur à la consigne. En d'autres termes, le saturateur 14 autorise le flux magnétique direct estimé à être supérieur à la consigne de flux magnétique direct.

Dans l'exemple de mise en oeuvre illustré par la figure 4, les moyens de commutation 20 comprennent trois branches parallèles 20a, 20b, 20c qui permettent elles aussi d'alimenter la machine 3 en triphasé. Ici encore, deux branches 20a, 20b suffiraient pour alimenter la machine 3 en monophasé de même que plus de trois branches parallèles permettraient d'alimenter la machine 3 en multiphasé au-delà de trois phases. Les branches 20a, 20b, 20c comportent chacune deux extrémités connectables entre une première et une deuxième polarité du premier réseau électrique 2 qui constituent l'entrée des moyens de commutation 20. Chaque branche 20a, 20b, 20c comporte aussi un point milieu respectivement 6a, 6b, 6c connecté à une entrée d'enroulement d'induit 32a, 32b, 32c.

La branche 20a comporte des diodes 65a, 66a disposées l'une entre le point milieu 6a et l'une des extrémités connectables, l'autre entre le point milieu 6a et l'autre des extrémités connectables au réseau 2. La branche 20b comporte des diodes 65b, 66b disposées l'une entre le point milieu 6b et l'une des extrémités connectables, l'autre entre le point milieu 6b et l'autre des extrémités connectables au réseau 2. La branche 20c comporte des diodes 65c, 66c disposées l'une entre le point milieu 6c et l'une des extrémités connectables, l'autre entre le point milieu 6c et l'autre des extrémités connectables au réseau 2.

Lorsque la machine 3 génère entre les entrées des enroulements d'induit 32a, 32b, 32c, des différences de tension électrique supérieures à la somme de la tension de la batterie 108 et des tensions de seuil des diodes, les diodes mises en conduction font circuler un courant de la machine électrique 3 vers le réseau 2 de sorte que la machine 3 fournit une puissance P2 au réseau 2. En d'autres termes, la puissance fournie par le réseau 2 est alors de valeur négative.

Le montage qui vient d'être expliqué permet de faire un redressement à diode. Le courant fourni par le réseau 1 est contrôlé par les moyens de commutation 10 fonctionnant en mode onduleur alors que du coté des moyens de commutation 20, seules les diodes assurent le redressement vers le réseau 2. Les interrupteurs des moyens de commutation 10 sont commandés par des rapports cycliques de modulation en largeur d'impulsion (MLI) de façon à appliquer une tension suffisante pour contrôler le courant fourni du coté des moyens de commutation 20.

Ce mode de fonctionnement, bien que très simple présente au moins deux inconvénients.

Un premier inconvénient est que le transfert de puissance ne peut se faire que si la tension coté générateur est supérieure à celle coté récepteur.

Le deuxième inconvénient est que le courant électrique transféré est chargé d'harmoniques résultant du redressement à diode avec pour effet de produire des pertes plus importantes dans la machine que lorsque le transfert se fait avec des courants sinusoïdaux.

Les moyens de commutation 20 de la figure 4 permettent de remédier à ces inconvénients.

La branche 20a comporte des interrupteurs 61a, 62a disposés l'un entre le point milieu 6a et l'une des extrémités connectables, l'autre entre le point milieu 6a et l'autre des extrémités connectables au réseau 2. La branche 20b comporte des interrupteurs 61b, 62b disposés l'un entre le point milieu 6b et l'une des extrémités connectables, l'autre entre le point milieu 6b et l'autre des extrémités connectables au réseau 2. La branche 20c comporte des interrupteurs 61c, 62c disposés l'un entre le point milieu 6c et l'une des extrémités connectables, l'autre entre le point milieu 6c et l'autre des extrémités connectables au réseau 2.

En référence à la figure 3, les moyens de commutation 20 sont pilotés par des moyens de commande 21-26 de manière à pouvoir échanger avec le deuxième jeu d'enroulements d'induit 32 une puissance électrique asservie à une deuxième consigne P₂*. La consigne P₂* est de valeur positive pour transmettre la puissance électrique du réseau électrique 2 vers le jeu d'enroulements d'induit 32 et de valeur négative pour transmettre la puissance électrique du jeu d'enroulements d'induit 32 vers le réseau électrique 2.

De manière à remédier aux inconvénients ci-dessus exposés en mode redresseur, les interrupteurs des moyens de commutation 20 sont commandés en exploitant les valeurs de résistance Rs2, d'inductance mutuelle Lm2 et d'inductances de fuite Lf2 de chaque enroulement d'induit 32a, 32b, 32c tel que représenté en figure 4.

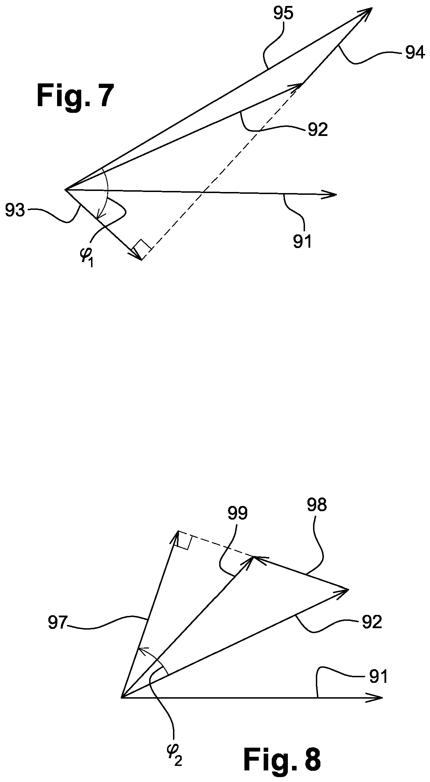

Les figures 7 et 8 sont des diagrammes vectoriels qui montrent une tension électrique 92 secondaire disponible sur chaque enroulement d'induit 32a, 32b, 32c pour une tension électrique 91 disponible respectivement sur chaque enroulement d'induit 31a, 31b, 31c.

Pour obtenir une tension électrique 95 à redresser supérieure à la tension électrique 92 disponible comme représenté en figure 7, les interrupteurs 61a, 62a, 61b, 62b, 61c, 62c, sont commandés par les moyens de commande de manière à conduire un courant Is2 comportant un retard de phase ϕ1 par rapport à la tension électrique 92 disponible. Il résulte alors du courant Is2, d'une part une tension électrique 93 égale à Rs2▪Is2 et d'autre part une tension électrique 94 égale à Lf2▪(dIs2/dt) qui s'ajoute à la tension 92 pour donner la tension électrique 95 à redresser, supérieure en module à la tension électrique 92.

Pour obtenir une tension électrique 99 à redresser inférieure à la tension électrique 92 disponible comme représenté en figure 8, les interrupteurs 61a, 62a, 61b, 62b, 61c, 62c, sont commandés par les moyens de commande de manière à conduire un courant Is2 comportant une avance de phase ϕ2 par rapport à la tension électrique 92 disponible. Il résulte alors du courant Is2, d'une part une tension électrique 97 égale à Rs2▪Is2 et d'autre part une tension électrique 98 égale à Lf2▪(dIs2/dt) qui s'ajoute vectoriellement à la tension 92 pour donner la tension électrique 99 à redresser, inférieure en module à la tension électrique 92.

Les interrupteurs 61a, 62a, 61b, 62b, 61c, 62c sont commandés par un module 21 de mise en conduction des interrupteurs par modulation d'impulsions. Les impulsions sont générées de façon à annuler la différence entre la consigne d'asservissement en puissance P₂* e t 1a puissance P mesurée.

Le module 21 élabore de manière connue la modulation d'impulsions de façon à ce que les courants dans les phases a, b, c du jeu d'enroulements d'induit 32, produisent un flux magnétique direct Φ_{d} relatif à un champ inducteur sur un axe d et un flux magnétique orthogonal Φ_{q} relatif à un champ de réaction d'induit sur un axe q en fonction d'une vitesse de rotation Q de la machine électrique 3.

Un module 25 élabore une consigne de flux magnétique direct Φ_{d}* relatif au champ inducteur et une consigne de flux magnétique orthogonal Φ_{q}* relatif au champ de réaction d'induit, typiquement à partir d'une cartographie en fonction d'une puissance et d'une vitesse de rotation Q de la machine électrique 3. La valeur de puissance est celle données en sortie d'un régulateur 26.

Les consignes de flux magnétique Φ_{d}*, Φ_{q}* peuvent être directement appliquées en boucle ouverte en entrée du module 21.

De façon à améliorer la précision et les temps de réponse au moyen d'une boucle de régulation interne, un régulateur 23 de flux magnétique direct et un régulateur 22 de flux magnétique orthogonal sont insérés entre le module 25 et le module 21.

Le gain Gfq(z) du régulateur 22 de flux magnétique orthogonal comporte de préférence une composante intégrale de façon à annuler une erreur ε(z) résultant de la différence entre la consigne de flux magnétique Φ_{q}* et un retour de flux magnétique Φ_{q}^{r} estimé par un module 29 à partir de valeurs de tensions et de courants de phases a, b, c fournies par un module de mesure 28.

Le module de mesure 28 est connecté à des capteurs 63, 64 de tension et de courant dans chacune des phases a, b, c des enroulements d'induit 32. Le module de mesure 28 est capable de déterminer une position angulaire θ du champ inducteur lié au rotor et, par dérivation temporelle, d'en déduire la vitesse de rotation Q de la machine électrique 3 qui est transmise au module 25.

Le gain Gfd(z) du régulateur 23 de flux magnétique direct comporte de préférence lui aussi une composante intégrale de façon à annuler une image d'erreur ε(z) résultant de la différence entre la consigne flux magnétique Φ_{d}* et un retour de flux magnétique Φ_{d}^{r} estimé par le module 29 à partir de valeurs de tensions et de courants de phases a, b, c. Un saturateur 24 disposé en entrée du régulateur 23 donne l'image égale à l'erreur ε(z) tant que l'erreur est positive, en d'autres termes tant que le retour de flux magnétique Φ_{d}^{r} est inférieur à la consigne flux magnétique Φ_{d}*. Le saturateur 24 donne l'image égale à zéro lorsque l'erreur est négative, en d'autres termes lorsque le retour de flux magnétique Φ_{d}^{r} est supérieur à la consigne flux magnétique Φ_{d}*. Le saturateur 24 permet ainsi de ne pas désexciter la machine lorsque le flux direct effectif est supérieur à la consigne. En d'autres termes, le saturateur 24 autorise le flux magnétique direct estimé à être supérieur à la consigne de flux magnétique direct.

Le régulateur de puissance 26 est agencé pour asservir la puissance P mesurée à une consigne P₂* de valeur positive pour transmettre la puissance électrique du premier réseau électrique 2 vers le deuxième jeu d'enroulements d'induit 32 et de valeur négative pour transmettre la première puissance électrique du deuxième jeu d'enroulements d'induit 32 vers le deuxième réseau électrique 2. Le gain Gp(z) du régulateur 26 comporte éventuellement une composante proportionnelle et/ou une composante dérivée. Le gain Gp (z) du régulateur 26 comporte de préférence une composante intégrale de façon à annuler une erreur ε(z) résultant de la différence entre la puissance P mesurée par le capteur 27 et la consigne P₂* de puissance.

Ainsi, une boucle d'asservissement comprenant les moyens de commutation 20 et le régulateur de puissance 26, permet de faire fonctionner la machine 3, en d'autres termes une même machine électrique en mode démarreur en fournissant à partir du réseau 2 une puissance de valeur positive et en mode alternateur en fournissant à partir du réseau 2 une puissance de valeur négative.

Les capteurs 63, 64 de mesure de courant et de tension dans les enroulements d'induit 32 permettent optionnellement de mesurer la puissance P échangée et de se passer ainsi du capteur 27.

Il est avantageux d'installer le dispositif ci-dessus expliqué dans un véhicule, notamment dans un véhicule automobile, pour mettre en oeuvre le procédé décrit à présent.

En mode moteur, les deux convertisseurs 10, 20 sont pilotés en mode onduleur et alimentent les phases de la machine 3 avec des courants déphasés. Ce mode moteur est comparable aux modes moteurs de l'état connu de la technique avec toutefois la particularité d'être réalisé par deux convertisseurs alimentant chacun une moitié de la machine plutôt qu'avec un seul convertisseur alimentant la machine à lui seul.

Pour réaliser le mode moteur, les actions exécutées sont celles de positionner une première consigne de puissance P₁* et une deuxième consigne de puissance P₂* à des valeurs dont la somme est positive de sorte que la machine électrique 3 fonctionne en mode moteur en convertissant une puissance électrique en puissance mécanique.

En mode générateur, plusieurs méthodes de fonctionner sont proposées pour permettre le fonctionnement en générateur de courant.

La méthode qui se base sur un simple redressement à diodes, donne un fonctionnement similaire à celui d'un alternateur à double étoile. Tous les transistors MOS sont bloqués et seules les diodes sont chargées du redressement.

La méthode qui se base sur un redressement synchrone, consiste à piloter les deux convertisseurs en mode redresseur synchrone, dérivant des courants déphasés. Pour les machines à réluctance, un courant est injecté au début de chaque cycle pour exciter la machine avant que de l'énergie électrique ne puisse être extraite. Ce mode générateur est comparable aux modes générateurs de l'état connu de la technique avec toutefois la particularité d'être réalisé par deux convertisseurs alimentant chacun une moitié de la machine plutôt qu'avec un seul convertisseur alimentant la machine à lui seul. Les transistors MOS commutent suivant une loi PWM (Pulse Width Modulation pour modulation par largeur d'impulsion en anglais) de façon à absorber un courant sinusoïdal et en phase avec la tension.

Cela présente au moins deux avantages principaux.

Un premier avantage est de faire circuler dans les bobinages statoriques, un courant sinusoïdal qui minimise les pertes joules de l'alternateur, car dépourvu d'harmoniques.

Un deuxième avantage est de pouvoir réguler la tension de sortie continue VDC (voltage direct current en anglais), à condition qu'elle soit supérieure à un seuil donné, indépendamment de la tension alternative fournie par l'alternateur en hachant sur l'impédance de fuite de l'alternateur. Ceci permet de lever la contrainte classique des alternateurs entre la puissance maximale et le régime minimal où cette puissance est atteinte.

Pour réaliser le mode générateur, les actions exécutées sont celles de positionner la première consigne de puissance P₁* et la deuxième consigne de puissance P₂* à des valeurs dont la somme est négative de sorte que la machine électrique 3 fonctionne en mode générateur en convertissant une puissance mécanique en puissance électrique.

En mode convertisseur cc-cc, plusieurs méthodes de fonctionner sont proposées pour permettre un transfert de puissance en courant continu d'un circuit à l'autre.

La méthode qui se base sur une conversion synchrone, consiste à exciter les phases avec une séquence de courants homopolaires à une fréquence proche de celle de l'harmonique fondamentale qui correspond à une vitesse maximale de rotation de la machine. L'homopolarité de la séquence garantit que le rotor ne recevra aucune couple et ne sera donc pas entraîné ni freiné en rotation. Du fait de l'homopolarité, l'amplitude des courants doit être réduite de moitié afin de ne pas saturer le fer de la machine. L'avantage de cette méthode réside dans les faibles pertes fer qu'elle engendre. Son principal inconvénient est la puissance réduite qu'elle peut transmettre.

La méthode qui se base sur une conversion asynchrone, consiste à induire les circuits primaires par des courants à haute fréquence dont la phase est complètement désynchronisée avec la rotation du rotor. Une telle méthode de fonctionner a pour avantage d'augmenter la puissance que peut convertir le circuit magnétique de la machine et de ne pas engendrer de couple qui risquerait de faire tourner ou ralentir la machine.

On peut également utiliser d'autres formules de modulation que celle par largeur d'impulsion comme celle de la pleine onde, ce qui permet d'augmenter encore la puissance transmise en mode cc-cc. Elles ont pour inconvénient de générer plus de pertes fer, par courants de Foucault et par hystérésis, que la première formulation.

Il est important de noter que les deux méthodes peuvent coexister dans une seule et même machine, sans modifications aucune. On peut ainsi tirer parti des avantages de chaque méthode en fonction des situations rencontrées par l'ADPS.

On indique aussi la possibilité de faire fonctionner l'ADPS en mode cc-cc avec la méthode de conversion synchrone ou avec la méthode de conversion asynchrone, en utilisant indifféremment le redressement à diode ou le redressement synchrone.

Pour réaliser le mode de conversion cc-cc, les actions exécutées sont celles de positionner la consigne de puissance première P₁* et la deuxième consigne de puissance P₂* à des valeurs de signes opposés de sorte que la machine électrique 3 fonctionne en mode transformateur pour transférer une puissance électrique d'un réseau électrique à l'autre.

La mise en oeuvre du dispositif et du procédé qui viennent d'être décrits dans un véhicule automobile, présente de nombreux avantages parmi lesquels ceux mentionnés ci-dessous.

L'énergie électrique est directement fournie à la ligne réceptrice, sans être traitée par plus d'un seul convertisseur électronique de puissance. Il en résulte un bien meilleur rendement, de moindres problèmes de dissipation thermique, et un dimensionnement optimisé de l'alternateur qui doit moins fournir d'énergie pour compenser les pertes.

L'ADPS est naturellement un convertisseur bidirectionnel. Il n'y a pas de conception complexe pour arriver à ce résultat.

Le nombre de circuits indépendants de l'ADPS n'est pas limité. On peut ainsi alimenter séparément et isoler de nombreuses charges ou circuits critiques pour la sécurité du véhicule, ce qui est un facteur supplémentaire de sécurité.

La quantité d'énergie à échanger entre les multiples lignes à courant continu est réduite, puisque chaque sortie de l'ADPS peut alimenter l'une de ces lignes en permanence. L'échange entre les multiples lignes du système est donc réduit aux situations d'urgence et aux cas où le moteur thermique est arrêté. Ceci a pour conséquence de minimiser toute recirculation de l'énergie électrique à travers un convertisseur électronique de puissance et donc de minimiser les pertes.

Le moteur thermique est démarrable à partir de l'énergie fournie par n'importe quelle combinaison des sources disponibles.

Le circuit magnétique de la machine agit comme un transformateur et assure ainsi l'isolation galvanique entre les lignes et donc la sécurité en cas de court-circuit, de sur- ou sous-tension, etc. La désactivation des bras de l'onduleur du côté opposé au défaut isole complètement le défaut.

L'ADPS peut fonctionner en freinage régénératif lors des phases de freinage. On améliore ainsi la consommation de carburant du véhicule et ses performances.

L'ADPS peut assister l'ESP et l'ABS en rajoutant ou éliminant du couple de freinage sur l'essieu moteur. Cette commande de couple possède deux avantages : elle est rapide puisque ne dépendant que de constantes de temps électriques et elle offre un bon rendement puisque l'énergie correspondant au couple de freinage ajouté à la roue est régénérée.

L'ADPS est à la fois un alternateur et un démarreur de sorte que le véhicule ainsi équipé dispose d'une fonction Démarrage/Arrêt (Start/Stop en anglais et dans le langage courant) qui permet d'éteindre le moteur thermique en embouteillage, aux feux rouges, et autres arrêts un peu prolongés et le redémarrer aussitôt que le conducteur sollicite l'accélérateur ou n'appuie plus sur le frein.

L'ADPS peut également fournir un surplus de couple à l'accélération (fonction nommée « boost ») pour augmenter les performances du véhicule. L'énergie utilisée pour ce boost doit au préalable avoir été stockée, ce qui impose des batteries ou super capacités beaucoup plus grosses que pour un système XbW simple.

Moins de redondances matérielles et fonctionnelles sont nécessaires dans la mesure où un seul équipement occupe les fonctions de démarreur, d'alternateur, et de passerelle. D'où un gain de coût, d'encombrement, de masse, et d'utilisation de matières premières. De plus, les fonctions de freinage régénératif, de start/stop et de boost sont fournies sans ajout de matériel. Il y a donc un gain significatif en prestation à coût constant.

Le circuit magnétique de L'ADPS agit comme un filtre pour les charges induisant beaucoup d'interférences électromagnétiques conduites dans leur alimentation. C'est un moyen supplémentaire à la disposition de l'architecte électrotechnique d'un véhicule pour réduire ou éliminer ces interférences.

En cas d'utilisation de super capacités sur un circuit, l'ADPS peut compenser leur courant de fuite en mode veille au moyen d'une seule batterie ou autre source connectée sur un seul de ses circuits. Il n'y a plus besoin de batterie en parallèle avec les super capacités pour s'assurer de leur disponibilité au redémarrage du véhicule.

Sur les véhicules qui ne nécessitent pas d'alimentation multiple, l'ADPS peut sans modifications être utilisé comme alterno-démarreur, débitant sur un seul circuit 14V. Il suffit de connecter les multiples circuits de l'ADPS en parallèle. L'ADPS peut alors être utilisé sur tous les véhicules de la gamme d'un constructeur avec pour effet de produire une économie d'échelle. On peut ainsi introduire l'alternodémarreur et la prestation start/stop dans une gamme à coût de développement réduit car partagé.

## Revendications

1. Dispositif de conversion réversible de puissance électrique en puissance mécanique comportant une machine électrique (3), des premiers moyens de commutation (10) pour connecter un premier jeu d'enroulements d'induit (31) de ladite machine électrique à un premier réseau électrique (1) et des premiers moyens de commande (11-16) pour piloter lesdits premiers moyens de commutation (10) de manière à pouvoir échanger avec ledit premier jeu d'enroulements d'induit (31) une première puissance électrique asservie à une première consigne (P₁*) de valeur positive pour transmettre ladite première puissance électrique dudit premier réseau électrique (1) vers ledit premier jeu d'enroulements d'induit (31) et de valeur négative pour transmettre ladite première puissance électrique dudit premier jeu d'enroulements d'induit (31) vers ledit premier réseau électrique (1),
ladite machine électrique (3) comprend au moins un deuxième jeu d'enroulements d'induit (32) séparé dudit premier jeu d'enroulements d'induits par isolation galvanique, ledit dispositif de conversion réversible de puissance électrique en puissance mécanique comprend des deuxièmes moyens de commutation (20) pour connecter ledit deuxième jeu d'enroulements d'induit (32) à au moins un deuxième réseau électrique (2) et des deuxièmes moyens de commande (21-26) pour piloter lesdits deuxièmes moyens de commutation (20) de manière à pouvoir échanger avec ledit deuxième jeu d'enroulements d'induit (32) une deuxième puissance électrique asservie à une deuxième consigne (P₂*) de valeur positive pour transmettre ladite deuxième puissance électrique dudit deuxième réseau électrique (2) vers ledit deuxième jeu d'enroulements d'induit (32) et de valeur négative pour transmettre ladite deuxième puissance électrique dudit deuxième jeu d'enroulements d'induit (32) vers ledit deuxième réseau électrique (2), et
lesdits deuxièmes moyens de commutation (20) et lesdits deuxièmes moyens de commande (21-26) sont séparés desdits premiers moyens de commutation (10) et desdits premiers moyens de commande (11-16) par isolation galvanique.

2. Dispositif selon la revendication 1, **caractérisé en ce que** ladite machine électrique comprend au moins deux jeux (35, 36) distincts de dents de stator (41) magnétiquement couplés, un premier jeu (35) de dents (35a, 35b, 35c) de stator sur chacune desquelles est bobiné un enroulement dudit premier jeu d'enroulements d'induit (31) et un deuxième jeu (36) de dents (36a, 36b, 36c) de stator sur chacune desquelles est bobiné un enroulement dudit deuxième jeu d'enroulements d'induit (32).

3. Dispositif selon la revendication 1, **caractérisé en ce que** ladite machine électrique comprend un jeu commun de dents de stator (37a, 37b, 37c, 37d, 37e, 37f), sur chacune desquelles sont bobinés un enroulement dudit premier jeu d'enroulements d'induit (31) et un enroulement dudit deuxième jeu d'enroulements d'induit (32), séparés l'un de l'autre par une paroi électriquement isolante (43).

4. Dispositif selon l'une des revendications 1 à 3, **caractérisé en ce qu'**au moins les premiers moyens de commutation (10) comprennent au moins deux branches parallèles (10a, 10b) comportant des extrémités connectables entre une première et une deuxième polarité dudit premier réseau électrique (1), un point milieu (5a, 5b) connecté à une entrée d'enroulement d'induit (31a, 31b) et des interrupteurs (51a, 52a, 51b, 52b) commandés par lesdits premiers moyens de commande et disposés chacun entre le point milieu (5a, 5b) et l'une des dites extrémités connectables.

5. Dispositif selon la revendication 4, **caractérisé en ce qu'**au moins les premiers moyens de commande comprennent des capteurs (53, 54) de mesure de courant et de tension dans les enroulements d'induit (31) pour mesurer la puissance échangée et un module de mise en conduction des interrupteurs par modulation d'impulsions qui tendent à annuler une différence entre la consigne d'asservissement en puissance (P₁*) et la puissance mesurée.

6. Dispositif selon la revendication 5, **caractérisé en ce que** les moyens de commande comprennent :
- un module (15, 25) d'élaboration d'au moins une consigne de flux magnétique direct relatif à un champ inducteur et/ou d'une consigne de flux magnétique orthogonal relatif à un champ d'induit en fonction d'une vitesse de rotation (Q) de la machine électrique,
- un régulateur de puissance (16, 26) qui pilote le module (15, 25) d'élaboration pour annuler ladite différence entre la consigne (P₁*, P₂*) d'asservissement en puissance et la puissance mesurée,
- un module (19, 29) d'estimation de flux magnétiques dans la machine électrique à partir des capteurs (53, 63, 54, 64) de mesure de courant et de tension,
- au moins un régulateur (12, 13, 22, 23) de flux magnétique qui pilote le module (11, 21) de mise en conduction pour annuler au moins une différence entre une consigne de flux magnétique et un flux magnétique estimé dans la machine électrique.

7. Dispositif selon la revendication 6, **caractérisé en ce que** les moyens de commande comprennent un saturateur (14, 24) qui autorise le flux magnétique direct estimé à être supérieur à la consigne de flux magnétique direct.

8. Véhicule automobile comprenant deux réseaux électriques (1, 2) séparés par isolation galvanique et un dispositif selon l'une des revendications précédentes.

9. Procédé mis en oeuvre dans un véhicule selon la revendication précédente, comprenant des actions consistant à positionner :
- une première (P₁*) et une deuxième (P₂*) consigne de puissance à des valeurs dont la somme est positive de sorte que la machine électrique (3) fonctionnant en mode moteur, convertit une puissance électrique en puissance mécanique,
- la première (P₁*) et la deuxième (P₂*) consigne de puissance à des valeurs dont la somme est négative de sorte que la machine électrique (3) fonctionnant en mode générateur, convertit une puissance mécanique en puissance électrique,
- la première (P₁*) et la deuxième (P₂*) consigne de puissance à des valeurs de signes opposés de sorte que la machine électrique (3) fonctionnant en mode transformateur, transfert une puissance électrique d'un réseau à l'autre réseau électrique.

## Patentansprüche

1. Vorrichtung zur reversiblen Umwandlung elektrischer Leistung in mechanische Leistung, umfassend eine elektrische Maschine (3), erste Schaltmittel (10) zum Verbinden eines ersten Satzes von Ankerwicklungen (31) der elektrischen Maschine mit einem ersten Stromnetz (1) und erste Steuerungsmittel (11-16) zum Vorsteuern der ersten Schaltmittel (10), um mit dem ersten Satz von Ankerwicklungen (31) eine erste elektrische Leistung austauschen zu können, die einem ersten Sollwert (P₁*) mit positivem Wert, um die erste elektrische Leistung des ersten Stromnetzes (1) zu dem ersten Satz von Ankerwicklungen (31) zu übertragen, und mit negativem Wert, um die erste elektrische Leistung des ersten Satzes von Ankerwicklungen (31) zu dem ersten Stromnetz (1) zu übertragen, nachgeführt wird,
wobei die elektrische Maschine (3) wenigstens einen zweiten Satz von Ankerwicklungen (32) umfasst, der von dem ersten Satz von Ankerwicklungen durch galvanische Trennung getrennt ist,
wobei die Vorrichtung zur reversiblen Umwandlung elektrischer Leistung in mechanische Leistung zweite Schaltmittel (20) zum Verbinden des zweiten Satzes von Ankerwicklungen (32) mit wenigstens einem zweiten Stromnetz (2) umfasst, sowie zweite Steuerungsmittel (21-26) zum Vorsteuern der zweiten Schaltmittel (20), um mit dem zweiten Satz von Ankerwicklungen (32) eine zweite elektrische Leistung austauschen zu können, die einem zweiten Sollwert (P₂*) mit positivem Wert, um die zweite elektrische Leistung des zweiten Stromnetzes (2) zu dem zweiten Satz von Ankerwicklungen (32) zu übertragen, und mit negativem Wert, um die zweite elektrische Leistung des zweiten Satzes von Ankerwicklungen (32) zu dem zweiten Stromnetz (2) zu übertragen, nachgeführt wird, und
wobei die zweiten Schaltmittel (20) und die zweiten Steuerungsmittel (21-26) von den ersten Schaltmitteln (10) und die ersten Steuerungsmitteln (11-16) durch galvanische Trennung getrennt sind.

2. Vorrichtung nach Anspruch 1, **dadurch gekennzeichnet, dass** die elektrische Maschine wenigstens zwei verschiedene Sätze (35, 36) von magnetisch gekoppelten Statorzähnen (41) umfasst, einen ersten Satz (35) von Statorzähnen (35a, 35b, 35c), auf die jeweils eine Wicklung des ersten Satzes von Ankerwicklungen (31) gewickelt ist, und einen zweiten Satz (36) von Statorzähnen (36a, 36b, 36c), auf die jeweils eine Wicklung des zweiten Satzes von Ankerwicklungen (32) gewickelt ist.

3. Vorrichtung nach Anspruch 1, **dadurch gekennzeichnet, dass** die elektrische Maschine einen gemeinsamen Satz von Statorzähnen (37a, 37b, 37c, 37d, 37e, 37f) umfasst, auf die jeweils eine Wicklung des ersten Satzes von Ankerwicklungen (31) und eine Wicklung des zweiten Satzes von Ankerwicklungen (32) gewickelt sind, die durch eine elektrisch isolierende Wand (43) voneinander getrennt sind.

4. Vorrichtung nach einem der Ansprüche 1 bis 3, **dadurch gekennzeichnet, dass** wenigstens die ersten Schaltmittel (10) wenigstens zwei parallele Zweige (10a, 10b) umfassen, welche Enden, die zwischen eine erste und eine zweite Polarität des ersten Stromnetzes (1) schaltbar sind, einen Mittelpunkt (5a, 5b), der mit einem Eingang einer Ankerwicklung (31a, 31b) verbunden ist, und Schalter (51a, 52a, 51b, 52b), die von den ersten Steuerungsmitteln gesteuert werden und jeweils zwischen dem Mittelpunkt (5a, 5b) und einem der schaltbaren Enden angeordnet sind, aufweisen.

5. Vorrichtung nach Anspruch 4, **dadurch gekennzeichnet, dass** wenigstens die ersten Steuerungsmittel Sensoren (53, 54) zur Messung von Strom und von Spannung in den Ankerwicklungen (31), um die ausgetauschte Leistung zu messen, und ein Modul zum Leitendmachen der Schalter durch Modulation von Impulsen, die bestrebt sind, eine Differenz zwischen dem Sollwert der Leistungsregelung (P₁*) und der gemessenen Leistung zu null zu machen, umfassen.

6. Vorrichtung nach Anspruch 5, **dadurch gekennzeichnet, dass** die Steuerungsmittel umfassen:
- ein Modul (15, 25) zur Bestimmung wenigstens eines Sollwertes des direkten magnetischen Flusses bezüglich eines Induktionsfeldes und/oder eines Sollwertes des orthogonalen magnetischen Flusses bezüglich eines Ankerfeldes in Abhängigkeit von einer Drehzahl (Ω) der elektrischen Maschine,
- einen Leistungsregler (16, 26), welcher das Modul (15, 25) zur Bestimmung vorsteuert, um die Differenz zwischen dem Sollwert (P₁*, P₂*) der Leistungsregelung und der gemessenen Leistung zu null zu machen,
- ein Modul (19, 29) zur Schätzung der magnetischen Flüsse in der elektrischen Maschine ausgehend von den Sensoren (53, 63, 54, 64) zur Messung von Strom und von Spannung,
- wenigstens einen Regler (12, 13, 22, 23) des magnetischen Flusses, welcher das Modul (11, 21) zum Leitendmachen vorsteuert, um wenigstens eine Differenz zwischen einem Sollwert des magnetischen Flusses und einem geschätzten magnetischen Fluss in der Maschine zu null zu machen.

7. Vorrichtung nach Anspruch 6, **dadurch gekennzeichnet, dass** die Steuerungsmittel einen Sättiger (14, 24) umfassen, welcher zulässt, dass der geschätzte direkte magnetische Fluss größer als der Sollwert des direkten magnetischen Flusses ist.

8. Kraftfahrzeug, welches zwei Stromnetze (1, 2), die durch galvanische Trennung getrennt sind, und eine Vorrichtung nach einem der vorhergehenden Ansprüche umfasst.

9. Verfahren, welches in einem Fahrzeug nach dem vorhergehenden Anspruch durchgeführt wird und Aktionen umfasst, die darin bestehen einzustellen:
- einen ersten (P₁*) und einen zweiten (P₂*) Leistungssollwert auf Werte, deren Summe positiv ist, derart, dass die in der Motorbetriebsart arbeitende elektrische Maschine (3) eine elektrische Leistung in mechanische Leistung umwandelt,
- den ersten (P₁*) und den zweiten (P₂*) Leistungssollwert auf Werte, deren Summe negativ ist, derart, dass die in der Generatorbetriebsart arbeitende elektrische Maschine (3) eine mechanische Leistung in elektrische Leistung umwandelt,
- den ersten (P₁*) und den zweiten (P₂*) Leistungssollwert auf Werte mit entgegengesetzten Vorzeichen, derart, dass die in der Transformatorbetriebsart arbeitende elektrische Maschine (3) eine elektrische Leistung eines Netzes zu dem anderen Stromnetz überträgt.

## Claims

1. Device for reversible conversion of electrical power into mechanical power comprising an electrical machine (3), first switching means (10) for connecting a first set of armature windings (31) of said electrical machine to a first electrical network (1) and first control means (11-16) for driving said first switching means (10) so as to be able to exchange, with said first set of armature windings (31), a first electrical power controlled by a first setpoint (P₁*) of positive value to transmit said first electrical power from said first electrical network (1) to said first set of armature windings (31) and of negative value to transmit said first electrical power from said first set of armature windings (31) to said first electrical network (1),
said electrical machine (3) comprises at least one second set of armature windings (32) separated from said first set of armature windings by galvanic insulation,
said device for reversible conversion of electrical power into mechanical power comprises second switching means (20) for connecting said second set of armature windings (32) to at least one second electrical network (2) and second control means (21-26) for driving said second switching means (20) so as to be able to exchange, with said second set of armature windings (32), a second electrical power controlled by a second setpoint (P₂*) of positive value to transmit said second electrical power from said second electrical network (2) to said second set of armature windings (32) and of negative value to transmit said second electrical power from said second set of armature windings (32) to said second electrical network (2), and
said second switching means (20) and said second control means (21-26) are separated from said first switching means (10) and from said first control means (11-16) by galvanic insulation.

2. Device according to Claim 1, **characterized in that** said electrical machine comprises at least two distinct sets (35, 36) of magnetically coupled stator teeth (41), a first set (35) of stator teeth (35a, 35b, 35c) on each of which is wound a winding of said first set of armature windings (31) and a second set (36) of stator teeth (36a, 36b, 36c) on each of which is wound a winding of said second set of armature windings (32).

3. Device according to Claim 1, **characterized in that** said electrical machine comprises a common set of stator teeth (37a, 37b, 37c, 37d, 37e, 37f), on each of which are wound a winding of said first set of armature windings (31) and a winding of said second set of armature windings (32), separated from one another by an electrically insulating wall (43).

4. Device according to one of Claims 1 to 3, **characterized in that** at least the first switching means (10) comprise at least two parallel branches (10a, 10b) comprising ends that can be connected between a first and a second polarity of said first electrical network (1), a mid-point (5a, 5b) connected to an armature winding input (31a, 31b) and switches (51a, 52a, 51b, 52b) controlled by said first control means and each disposed between the mid-point (5a, 5b) and one of said connectable ends.

5. Device according to Claim 4, **characterized in that** at least the first control means comprise sensors (53, 54) for measuring current and voltage in the armature windings (31) to measure the exchanged power and a module for turning on switches by pulse modulation which tend to cancel a difference between the power controlling setpoint (P₁*) and the measured power.

6. Device according to Claim 5, **characterized in that** the control means comprise:
- a module (15, 25) for generating at least one direct magnetic flux setpoint relative to an inducting field and/or an orthogonal magnetic flux setpoint relative to an armature field as a function of a speed of rotation (Ω) of the electrical machine,
- a power regulator (16, 26) which drives the generating module (15, 25) to cancel said difference between the power controlling setpoint (P₁*, P₂*) and the measured power,
- a module (19, 29) for estimating magnetic fluxes in the electrical machine from the sensors (53, 63, 54, 64) for measuring current and voltage,
- at least one magnetic flux regulator (12, 13, 22, 23) which drives the turning-on module (11, 21) to cancel at least a difference between a magnetic flux setpoint and a magnetic flux estimated in the electrical machine.

7. Device according to Claim 6, **characterized in that** the control means comprise an absorber (14, 24) which allows the estimated direct magnetic flux to be greater than the direct magnetic flux setpoint.

8. Motor vehicle comprising electrical networks (1, 2) separated by galvanic insulation and a device according to one of the preceding claims.

9. Method implemented in a vehicle according to the preceding claim, comprising actions consisting in setting:
- a first (P₁*) and a second (P₂*) power setpoint to values whose sum is positive such that the electrical machine (3), operating in motor mode, converts an electrical power into mechanical power,
- the first (P₁*) and the second (P₂*) power setpoints to values whose sum is negative such that the electrical machine (3), operating in generator mode, converts a mechanical power into electrical power,
- the first (P₁*) and the second (P₂*) power setpoints to values of opposite signs such that the electrical machine (3), operating in transformer mode, transfers an electrical power from one network to the other electrical network.
